# NEUE EUROPÄISCHE PATENTSCHRIFT

(11) **EP 1 648 840 B2**
(45) Veröffentlichungstag und Bekanntmachung des Hinweises auf die Entscheidung über den Einspruch: **09.01.2019**
(45) Hinweis auf die Patenterteilung: 17.01.2007
(21) Anmeldenummer: 04741082.4
(22) Anmeldetag: 16.07.2004
(51) Int. Cl.: C04B 22/14, C04B 28/02, C01G 49/14, C01B 17/90, C01G 23/053

(54) **REDUKTIONSMITTEL FÜR DEN LÖSLICHEN CHROMATGEHALT IN ZEMENT UND VERFAHREN FÜR SEINE HERSTELLUNG**
REDUCING AGENT FOR THE SOLUBLE CHROMATE CONTENT OF CEMENT AND METHODS FOR THE PRODUCTION THEREOF
AGENT DE REDUCTION DESTINE AUX CHROMATES SOLUBLES PRESENTS DANS DU CIMENT ET PROCEDES DE PRODUCTION DUDIT AGENT DE REDUCTION

(30) Priorität: 17.07.2003 DE 10332530
(43) Veröffentlichungstag der Anmeldung: 26.04.2006
(60) Teilanmeldung: 07000770.3
(73) Patentinhaber: crenox GmbH, 47829 Krefeld (DE)
(72) Erfinder: VÖSSING, Michael, 44866 Bochum (DE); AUER, Gerhard, 47800 Krefeld (DE); LAUBACH, Benno, 47809 Krefeld (DE); KLEIN, Detlef, 47829 Krefeld (DE); SCHUY, Werner, 47918 Tönisvorst (DE); KÖLLISCH, Klaus, 47809 Krefeld (DE); WEISS, Erwin, 65830 Kriftel (DE); BAHL, Werner, 45657 Recklinghausen (DE); REESE, Philip, Nelson (NZ)
(74) Vertreter: Hoffmann Eitle
(86) Internationale Anmeldenummer: PCT/EP2004/007940
(87) Internationale Veröffentlichungsnummer: WO 2005/009917

(56) Entgegenhaltungen:
- EP-A1- 0 054 314
- EP-A1- 0 145 984
- EP-A1- 0 301 262
- EP-A1- 0 362 428
- EP-A2- 0 132 820
- EP-A2- 0 133 505
- EP-A2- 0 301 261
- EP-A2- 0 301 261
- EP-A2- 0 638 515
- EP-A2- 1 314 706
- EP-B1- 0 132 820
- EP-B1- 1 064 223
- WO-A1-84/01942
- WO-A1-84/02900
- WO-A1-96/33133
- WO-A1-98/54095
- WO-A1-2008/000887
- DD-A5- 212 727
- DE-A1- 2 630 196
- DE-A1- 3 329 842
- DE-A1- 3 724 677
- DE-A1- 4 219 351
- DE-A1- 19 744 035
- DE-B- 1 173 074
- DE-U1-202004 018 827
- DE-U1-202004 021 087
- US-A- 1 626 623
- US-A- 3 016 286
- SACHSTANDSBERICHT ZUR BEDEUTUNG DES CHOMATES IN ZEMENTEN UND ZEMENTHALTIGEN ZUBEREITUNGEN VOM 5. JANUAR 1999; VEREIN DEUTSCHER ZEMENTWERKE E.V.,FORCHUNGSINSTITUT DER ZEMENTINDUSTRIE
- ULRICH ROTHE: 'RüCKFüHRUNG VON DüNNSäURE IN DER TITANDIOXIDPRODUKTION' SCHRIFTENRIEHE NR. 17,HOCHSCHULE BREMERHAVEN, BETRIEBS- UND VERSORGUNGSTECHNIK-TAGE 20 Oktober 1989, KRONOS INTERNATIONAL, INC., LEVERKUSEN, Seiten 41 - 50
- BRIEF PANALYTICAL B.V.
- GUTACHTEN, FILTERSALZ AUS DEM SULFATPROZESS ZUR TITANDIOXIDPRODUKTION FüR DEN EINZATZ ALS CHROM(VI)-REDUKTIONSMITTEL IN ZEMENT, ERSTELLT VON PROF.DR.-ING. MATTHIAS KIND, MäRZ 2007
- TEST REPORT, FORCHUNGSINSTITUT DER ZEMENTINDUSTRIE DüSSELDORF
- BRIEF PARTEKSEMENTIL
- TELEFAX SEMENTA AB
- TELEFAX LOHJA OY AB
- EIDESSTATTLICHE VERSICHERUNG MATTILLA
- REDUCTION OF WASTE ACID
- GUTACHTEN HERR DR. KARBACH, "ELEMENTANALYTIK UND KRISTALLITGRöSSENBESTIMMUNG VON KRONOCHROME"
- GUTACHTEN HERR PROF.KNAUTH, ERSTELLT IN AUFTRAG VON TRONOX PIGMENTS INTERNATIONAL GMBH, ZüRICH.
- MANNS W. ET AL: 'EISEN (II) SULFAT ALS ZUSATZ ZUR CHROMATREDUZIERUNG' BETON Februar 1999, Seiten 78 - 85
- MONOHYDRAT FERROGRANUL 30
- EIDESSTATTLICHE VERSICHERUNG MATTILA, 08-02-2006.
- DR.RER.NAT.W. WASSING, FORSCHUNGSINSTITUT DER ZEMENTINDUSTRIE, DüSSELDORF, GERMANY
- VERSUCHSBERICHT UNI HALLE
- VDZ ANALYSENBERICHT 2006/0641 VOM 27-11-2006
- EINGABE KEMIRA ZU D7
- INFORMATION WEBSITE: HTTPS://WWW.CEMEX.CO.UK/CEMENT.ASPX
- BESCHLUSS DE 2004018827 U1
- BESCHLUSS DE 202004021087 U1
- LADUNG MüNDL. VERHANDLUNG DE202004018827 U1
- LADUNG MüNDL. VERHANDLUNG DE 202004021087 U1
- GIPS-DATENBUCH, BUNDESVERHAND DER GIPS- UND GIPSBAUPLATTENIDUSTRIE E.V.
- UNTERSUCHUNGSERGEBNISSE EISEN(II)- MONOHYDRAT...
- BESCHLUSS BPATG 35 W (PAT)457/07
- BESCHLUSS BPATG 35 W (PAT)458/07

## Beschreibung

Die Erfindung betrifft Reduktionsmittel für den löslichen Chromatgehalt in Zement und deren Verwendung sowie Zubereitungen enthaltend diese Reduktionsmittel.

Der Chromgehalt von Zementen liegt je nach verwendeter Rohstoffbasis üblicherweise zwischen 20 ppm und 100 ppm. Das im Zement enthaltene Chrom kann beim Mischen mit Wasser als Chrom(VI) in Lösung gehen und bei häufigem Kontakt die Haut sensibilisieren und eine Chromallergie, die sogenannte Maurerkrätze, auslösen. Zum Schutz gegen die Chromallergie kommt in Betracht, das Chrom(VI) zum Chrom(III) chemisch zu reduzieren und damit die Löslichkeit drastisch zu reduzieren. Als Reduktionsmittel wird in der Zementindustrie hauptsächlich Eisen(II)sulfat (als Heptahydrat oder als Monohydrat) eingesetzt, um einen Chrom(VI)-Gehalt von kleiner als 2 ppm zu erreichen (vgl. Locher, Friedrich Wilhelm: Zement: Grundlagen der Herstellung und Verwendung, Verlag Bau + Technik GmbH, Düsseldorf 2000).

Eine Übersicht findet sich bei W. Manns, C. Laskowski: Beton 2/1999, 78-85.

In EP 54314, 160746 und 160747 A1 wird die Zugabe von Eisensulfat zum gemahlenen Zement beschrieben, wobei das Eisensulfat in trockener Form vor dem Zementlagersilo zugegeben wird. Gemäß EP 160 747 A1 ist das Eisensulfat beschichtet zur Erhöhung der Oxidationsbeständigkeit.

Eisen(II)sulfat stammt ganz überwiegend aus dem Prozess der Titandioxidherstellung nach dem Sulfatverfahren, wo es als Nebenprodukt anfällt. Dabei kann Eisen(II)sulfat durch Kristallisation aus der schwefelsauren, titan- und eisenhaltigen Lösung erhalten werden, die beim Aufschluss der titan- und eisenhaltigen Erze oder synthetischen Rohstoffe erhalten wird (Schwarzlösung). Hierbei wird ein Teil, jedoch nicht das gesamte Eisen aus der Lösung entfernt. Die Kristallisation des Eisen(II)sulfats erfolgt dabei durch Abkühlung der heißen Lösung z.B. durch Vakuumkühlung und gegebenenfalls zusätzliche Eindampfung.

Nach Abtrennung des Eisen(II)sulfats wird die verbleibende Lösung hydrolysiert. Das hierbei erhaltene Titanoxidhydrat wird durch Filtration von der dabei zurückbleibenden sogenannten Dünnsäure abgetrennt. Während das Titanoxidhydrat weiter zu Titandioxid verarbeitet wird, muss die Dünnsäure einer weiteren Verwertung zugänglich gemacht oder in geeigneter Form zu unschädlichen Verbindungen umgesetzt werden.

Auch aus der Dünnsäure kann Eisen(II)sulfat-Heptahydrat durch Kristallisation in ähnlicher Weise erhalten werden, wie oben für die Gewinnung von Eisen(II)sulfat-Heptahydrat aus der sogenannten Schwarzlösung beschrieben. In EP 132820 wird die Möglichkeit beschrieben, aus der Dünnsäure vor der Aufkonzentrierung Eisen(II)sulfat-Heptahydrat abzutrennen. Als Nachteil dabei wird jedoch angeführt, dass bei einer solchen Abtrennung von Eisen(II)sulfat-Heptahydrat die übrigen Metallsulfate in der Dünnsäure verbleiben und dass für das Grünsalz keine ausreichenden Verwendungsmöglichkeiten existieren.

EP132820 schlägt daher vor, die Dünnsäure einzudampfen, gegebenenfalls Metallsulfate abzutrennen und die restlichen Metallsulfate mit CaO, Ca(OH)₂ und/oder CaCO₃ zu Gips und schwerlöslichen Metallverbindungen umzusetzen. Die so erhaltenen Feststoffe haben eine hellbraune Farbe, die von der Oxidation von Eisen(II)-hydroxid zu Eisen(III)-hydroxid herrührt. Es wird u.a. die Verwendung dieses Feststoffgemisches bei der Kalzinierung von Zement als eisenhaltiger Zusatz beschrieben.

EP 160 747 A1 beschreibt, dass die chromatreduzierende Wirkung von Eisen(II)-sulfat welches dem Zement zugemischt ist, während der Lagerung mit der Zeit abnimmt. Die Menge an zuzusetzendem Eisen(II)-sulfat muss folglich in Abhängigkeit der Lagerzeit bestimmt werden, um zu gewährleisten, dass das Chromat in der Zementzubereitung zu einem bestimmten Zeitpunkt vollständig reduziert wird.

Von der dänischen Zementindustrie wird daher die Einhaltung des Grenzwertes von 2 ppm von löslichem Chrom nur für 2 Monate garantiert. (vgl. Bericht des Verein deutscher Zementwerke e.V. (VDZ) Forschungsinstitut der Zementindustrie "Chromatarmer Zement für einen verbesserten Arbeitsschutz" vom 16.01.02). Der Arbeitskreis "Analytische Chemie" im VDZ nennt eine unproblematische Lagerzeit von 3 bis 6 Monaten. Die Langzeitstabilität ist dabei jedoch stark abhängig von den Lagerbedingungen des Zementes, z.B. Feuchtigkeit und Temperatur (vgl. Sachstandsbericht zur Bedeutung des Chromates in Zementen und zementhaltigen Zubereitungen vom 05.01.99; Verein deutscher Zementwerke e.V. Forschungsinstitut der Zementindustrie).

JP2001220193 offenbart ein Eisen(II)sulfat-Monohydrat zur Chromreduktion in Zement.

Der Erfindung liegt die Aufgabe zu Grunde, ein eisen(II)sulfathaltiges Reduktionsmittel für den löslichen Chromatgehalt in Zement bereitzustellen.

Diese Aufgabe wird erfindungsgemäß zum einen gelöst durch die Bereitstellung eines eisen(II)sulfathaltigen Reduktionsmittels, umfassend Grünsalz und eine eisen(II)sulfathaltige Ausfällung, wobei die eisen(II)sulfathaltige Ausfällung Eisen(II)sulfat-Monohydrat enthält und erhältlich ist durch ein Verfahren, umfassend die Aufkonzentrierung einer eisen(II)sulfathaltigen Gebrauchtschwefelsäure aus der Titandioxidherstellung nach dem Sulfatverfahren und die Abtrennung der Schwefelsäure von der erhaltenen eisen(II)sulfathaltigen Ausfällung. Auf diese Weise wird ein wirksames Reduktionsmittel für Chromat in Zement erhalten.

Bevorzugt erfolgt nach der Abtrennung der Schwefelsäure von der erhaltenen eisen(II)sulfathaltigen Ausfällung eine anschließende Reduzierung der an der abgetrennten Ausfällung anhaftenden Schwefelsäuremenge durch eine weitere Abtrennung, Teilneutralisation oder Neutralisation dieser Schwefelsäure. Es wurde überraschend gefunden, dass insbesondere durch die Reduzierung der an der abgetrennten Ausfällung anhaftenden Schwefelsäuremenge durch eine weitere Abtrennung, Teilneutralisation oder Neutralisation ein geeignetes Reduktionsmittel für den löslichen Chromatgehalt in Zement erhalten werden kann, welches sowohl ohne weitere Zusätze als auch mit weiteren Zusätzen als Reduktionsmittel für Chromat in Zement eingesetzt werden kann.

Die Erfindung betrifft auch die Verwendung eines eisen(II)sulfathaltigen Reduktionsmittels, umfassend eine solche Ausfällung, die einen Titangehalt von 5 bis 15 Gew.-%, bezogen auf Eisen, und eine mittlere Kristallitgröße von höchstens 1 µm aufweist, zur Reduktion des löslichen Chromatgehaltes in Zement, sowie Zubereitungen, die solche Ausfällungen und Zement enthalten.

Die erfindungsgemäß verwendete Ausfällung kann wie folgt hergestellt werden.

Bei der Herstellung von Titandioxid nach dem Sulfatprozess fällt als Nebenprodukt eine ca. 25 %-ige wässrige Schwefelsäure (Dünnsäure) an. Aus dieser Dünnsäure können nach Aufkonzentrierung, Ausfällung von eisen(II)sulfathaltigen Salzgemischen und Abtrennung der Schwefelsäure von der erhaltenen Ausfällung die erfindungsgemäßen eisen(II)sulfathaltigen Reduktionsmittel gewonnen werden.
Bevorzugt erfolgt dabei nach der Abtrennung der Schwefelsäure von der erhaltenen Ausfällung eine anschließende Reduzierung der an der abgetrennten Ausfällung anhaftenden Schwefelsäuremenge.

Die verwendeten Gebrauchtschwefelsäuren weisen vorzugsweise einen Gehalt an Titan von weniger als 1,5 Gew.-%, besonders bevorzugt weniger als 0,8 Gew.-%, auf.

Die eisen(II)haltige Gebrauchtschwefelsäure wird auf einen Schwefelsäuregehalt von mehr als 50 %, vorzugsweise 60 bis 80 % aufkonzentriert, wobei die darin gelösten Salze - überwiegend Eisen(II)sulfat-monohydrat - als feinkristalliner Niederschlag weitgehend auskristallisieren. Die Aufkonzentrierung kann kontinuierlich oder diskontinuierlich in Eindampfanlagen durch Verdampfung oder Verdunstung des Wassers unter Normaldruck oder Vakuum erfolgen. Bevorzugt werden kontinuierlich betriebene Zwangsumlaufverdampferanlagen unter Vakuum eingesetzt. Die darauffolgende Kristallisation kann in Eindampfanlagen mit angeschlossener Salzreife (Abkühlung) erfolgen. Dabei können die vorhandenen Metallsulfate als Sulfate, Hydrogensulfate, Oxysulfate oder als komplexe Mischung hiervon auskristallisieren. Das Eisen kristallisiert dabei bevorzugt als Eisen(II)sulfat-Monohydrat. Nach Abtrennung der Ausfällung, z.B. durch Filtration, Sedimentation oder Zentrifugation, wird die verbleibende vorkonzentrierte Schwefelsäure entweder weiter aufkonzentriert und in den Prozess zurückgeführt oder anderweitig verwendet. Die abgetrennte Ausfällung (auch Filtersalz genannt, wenn die Gebrauchtschwefelsäure aus der Titandioxidherstellung erhalten wird) wird vorzugsweise in der Wärme (bei ca. 70°C) auf Filteraggregaten wie z.B. Kammerfilterpresse, Pressbandfilter, Drehfilter, Kerzen-Druckfilter abgetrennt. Besonders bevorzugt erfolgt die Abtrennung durch Filtration, z.B. mittels Kerzen-Druckfiltern oder Kammerfilterpressen.

Die abgetrennte Ausfällung (z. B. Filtersalz) enthält vorzugsweise zwischen 40 und 60 % Eisen(II)sulfat-monohydrat, zwischen 3 % und 10 % weitere Metallsulfate, zwischen 15 % und 30 % freie Schwefelsäure und etwa 10 % bis 13 % Wasser.

Nach dem Abtrennen wird die an der abgetrennten Ausfällung anhaftende Schwefelsäuremenge vorzugsweise weiter reduziert, z.B. durch Verdrängen der Schwefelsäure mit Druckluft oder Waschen mit Wasserdampf, durch Waschen mit einem Waschmedium, wie Dünnsäure, gesättigte FeSO₄-Lösung, verdünnte FeSO₄-haltige wässrige Lösungen oder Wasser, durch Umsetzen mit Eisen oder einer basischen Eisen(II)verbindung und Wasser oder durch Zugabe von pulverförmigen alkalischen Verbindungen, insbesondere CaCO₃, CaO, Ca(OH)₂, MgO und/oder Mg(OH)₂ oder deren Anschlämmungen, wie Kalkmilch.

Die Wäsche der abgetrennten Ausfällung mit einem Waschmedium wird bevorzugt mit 40 bis 500 Gew.-% Waschmedium bezogen auf die abgetrennte Ausfällung (z. B. Filtersalz) durchgeführt.

Vorzugsweise wird die Wäsche bei einer Temperatur von 55 bis 100 °C durchgeführt. Besonders bevorzugt sind Temperaturen zwischen 55 und 75 °C.

Als ideales Waschmedium hat sich Dünnsäure erwiesen, insbesondere wenn die Wäsche bei erhöhter Temperatur durchgeführt wird. Bei einer Wäsche der abgetrennten Ausfällung mit Dünnsäure in diesem Temperaturbereich wird
- wenig Salz aus der abgetrennten Ausfällung gelöst, da Dünnsäure bereits die Salze in gelöster Form enthält und die Löslichkeit von Eisen(II)sulfat in diesem Medium einen negativen Temperaturkoeffizienten aufweist (d.h. mit steigender Temperatur nimmt die Löslichkeit ab)
- eine stabile rieselfähige Ausfällung erhalten, die keinerlei thixotrope Eigenschaften aufweist.

Eine Wäsche mit warmer Dünnsäure kann in denselben Filtrationsapparaten durchgeführt werden, ohne die Ausfällung (Filterkuchen) zwischenzeitlich ausräumen zu müssen. Der Ablauf der Filtration umfasst bevorzugt die folgenden Schritte in der angegebenen Reihenfolge: Beladen des Filtrierapparates, Abpressen, ggf. Durch- bzw. Ausblasen, Waschen mit Dünnsäure, Durch- bzw. Ausblasen und Abwerfen. Die abgetrennte Ausfällung kann auch in einer Vorlage in warmer Dünnsäure suspendiert werden und erneut abfiltriert werden.

Die Wäsche mit Dünnsäure ist insbesondere dann vorteilhaft, wenn die abgetrennte Ausfällung Filtersalz aus der Titandioxidproduktion ist, da
- keine zusätzliche Waschflüssigkeit erzeugt wird, die entweder das Recycling-System durch Erhöhung der zu verdampfenden Wassermenge belasten würde oder anderweitig entsorgt werden müsste;
- heiße Dünnsäure für die Wäsche von Filtersalz in ausreichender Menge im Prozess zur Verfügung steht
- die Wäsche in denselben Apparaten durchgeführt werden kann, in denen auch die Abtrennung des Filtersalzes aus der vorkonzentrierten Schwefelsäure durchgeführt wird. Es sind also keine zusätzlichen Apparate erforderlich
- eine Kreuzkontamination von Waschmedium (Dünnsäure) und Mutterlauge (vorkonzentrierter Säure) der Filtersalzabtrennung verfahrenstechnisch unbedenklich ist
- die zur Eindampfung gelangende Dünnsäure durch die Wäsche aufgestärkt wird und somit bei der Dünnsäureaufarbeitung bei Verdampfung der gleichen Wassermenge mehr Säure aufkonzentriert wird und die entsprechende Menge an spezifisch benötigter Energie eingespart wird
- die bei der weiteren Aufarbeitung der abgetrennten Schwefelsäure verwendeten Anlagen (beispielsweise Filtersalzspaltanlagen, die Schwefelsäure-Kontaktanlagen und/oder Schwefeltrioxid-Absorptionsanlagen) um den aus dem Filtersalz ausgewaschenen Schwefelsäureanteil entlastet werden und somit eine höhere Menge an Filtersalz spalten können
- und die dem Filtersalz anhaftende Schwefelsäure dem Produktionskreislauf wieder zugeführt werden kann.

Als Waschmedien zur Reduzierung der an der abgetrennten Ausfällung anhaftenden Schwefelsäuremenge können neben Dünnsäure aber auch Wasser, eine gesättigte FeSO₄-Lösung oder verdünnte FeSO₄-haltige wässrige Lösungen verwendet werden.

Die Reduzierung der an der abgetrennten Ausfällung anhaftenden Schwefelsäuremenge nach Aufkonzentrierung der Gebrauchtschwefelsäure und Abtrennung der Ausfällung von der aufkonzentrierten Gebrauchtschwefelsäure kann erfindungsgemäß auch durch Waschen mit Wasserdampf, bevorzugt bei einer Temperatur oberhalb von 100°C, erfolgen. Dabei ist zu beachten, dass zusätzlich eingebrachte Flüssigkeit bzw. Kondensat später unter Aufwand von Energie destillativ wieder aus der anfallenden Säure entfernt werden muss.

Eine Wäsche mit Dampf bietet den Vorteil, dass nur sehr wenig Wasser in Form von Dampf verwendet wird, da zunächst eine Verdünnung der Säure durch den Wasserdampf erfolgt, der gleichzeitig die anhaftende Säure ausbläst. Bei den erfindungsgemäß angewandten erhöhten Temperaturen erfolgt nach der so durchgeführten Abtrennung der Schwefelsäure aus der abgetrennten Ausfällung keine weitere Kondensation von Wasserdampf. Man macht sich somit die hygroskopischen Eigenschaften der Schwefelsäure zu Nutze; es wird nämlich nur so lange Wasserdampf in der abgetrennten Ausfällung kondensiert als noch hoch konzentrierte Schwefelsäure vorhanden ist. Andererseits ist Eisen (II)sulfat-monohydrat in verdünnter Schwefelsäure bei erhöhter Temperatur nur schwer löslich und wird darüber hinaus in situ ausgeblasen, sodass sich kein Lösungsgleichgewicht einstellen kann. Daher wird durch die Wäsche mit Dampf nur ein geringer Anteil des in der abgetrennten Ausfällung enthaltenen Eisensulfats ausgewaschen.

Für die Wäsche der abgetrennten Ausfällung mit Dampf ergeben sich im allgemeinen folgende Vorteile:
- Es wird nur eine geringe Menge Wasser ins System eingebracht.
- Die ausgewaschene Schwefelsäure fällt in hoher Konzentration an.
- Es wird nur wenig Eisen(II)sulfat-monohydrat aus der abgetrennten Ausfällung gelöst wird, da Dampf nicht lösend wirkt.

Für die technische Anwendung ist die Wäsche mit Wasserdampf insbesondere dann vorteilhaft, wenn die abgetrennte Ausfällung Filtersalz aus der Titandioxidproduktion ist, da
- die zur Eindampfung gelangende Dünnsäure mit der Waschsäure aufgestärkt werden kann, somit bei der Dünnsäureaufarbeitung spezifisch weniger Wasser verdampft werden muss und die entsprechende Menge an Energie eingespart wird
- die Filtersalzspaltanlage, die Schwefelsäure-Kontaktanlage und die Schwefeltrioxid-Absorptionsanlage um den aus dem Filtersalz ausgewaschenen Anteil entlastet wird und somit für zusätzliche Produktionskapazität an Schwefelsäure zur Verfügung stehen.
- die im Filtersalz enthaltene Schwefelsäure zum großen Teil in das Kreislauf-System zurückgeführt wird

Für die Erzielung hoher Schwefelsäurekonzentrationen und niedriger Eisensulfatkonzentrationen im Kondensat der Wäsche sind hohe Dampftemperaturen von Vorteil, stellen aber höhere Materialanforderungen an die eingesetzten Apparate. Für die Erzielung niedriger Schwefelsäurekonzentrationen im verbleibenden Filtersalzkuchen sind niedrige Dampftemperaturen vorteilhaft.
Besonders bevorzugt wird die Wäsche mit Dampf bei einer Temperatur von 105 bis 130 °C durchgeführt.

Die Reduzierung der an der abgetrennten Ausfällung anhaftenden Schwefelsäuremenge nach Aufkonzentrierung der Gebrauchtschwefelsäure und Abtrennung der Ausfällung von der aufkonzentrierten Gebrauchtschwefelsäure kann erfindungsgemäß auch durch Umsetzung mit Wasser und metallischem Eisen oder einer basischen Eisen(II)verbindung oberhalb von 60 °C erfolgen.

Aufgrund der hohen Schwefelsäure-Konzentration in der abgetrennten Ausfällung und der in der Haftsäure gelösten Metallsulfate, die Schwefelsäure im Kristallgitter einbauen können, reagiert die abgetrennte Ausfällung nicht mit metallischem Eisen bzw. nur wenig mit basischen Eisen(II)verbindungen. Deshalb lässt sich der Schwefelsäureanteil in der Haftsäure technisch nur schwer durch direkte Umsetzung mit Eisen bzw. der basischen Eisen(II)verbindung teilneutralisieren oder neutralisieren. Bei Zugabe von Wasser wandelt sich Eisen(II)sulfat-monohydrat bei normaler Umgebungstemperatur in Eisen(II)sulfat-heptahydrat um. Um die Schwefelsäure so weit zu verdünnen, dass eine Reaktion mit Eisen bzw. der basischen Eisen(II)verbindung stattfindet, müsste also so viel Wasser zugesetzt werden, dass über die Bildung des Heptahydrates hinaus während der Umsetzung mit Eisen bzw. der basischen Eisen(II)verbindung stets eine wässrige Phase vorhanden ist. Wird die Reaktion in der Kälte durchgeführt, wäre im Anschluss das überschüssige Wasser in einem nachfolgenden Verfahrenschritt z.B. durch Trocknung zu entfernen.

Oberhalb von ca. 60 °C spaltet Eisen(II)sulfat-heptahydrat Wasser unter Bildung von Eisen(II)sulfat-monohydrat ab. Versetzt man die abgetrennte Ausfällung oberhalb dieser Temperatur mit wenig Wasser, bleibt das Monohydrat erhalten. Man erhält einen fließfähigen Brei, in dem Schwefelsäure so weit verdünnt ist, dass eine Reaktion mit Eisen bzw. der basischen Eisen(II)verbindung unter Bildung von zusätzlichem Eisen(II)sulfat-monohydrat möglich ist.

Bevorzugt wird die Umsetzung der abgetrennten Ausfällung mit metallischem Eisen bzw. der basischen Eisen (II)verbindung bei einer Temperatur von 60 bis 110 °C, besonders bevorzugt bei einer Temperatur von 75 bis 85 °C, durchgeführt.

Beim Abkühlen der ausreagierten breiigen, aber pump- und rührfähigen Mischung wird verbliebenes Wasser unter Bildung von Eisen(II)sulfat-heptahydrat vollständig gebunden und ein trockener harter Feststoff gebildet.

Die Umsetzung der abgetrennten Ausfällung erfolgt bevorzugt mit 80 bis 98 mol-% metallischem Eisen bzw. basischer Eisen(II)verbindung, wie Eisen(II)carbonat oder Eisen(II)hydroxid oder Eisen(II)oxid bezogen auf die an der abgetrennten Ausfällung (z. B. Filtersalz) anhaftenden Schwefelsäuremenge, wobei soviel Wasser hinzugegeben wird, dass das Molverhältnis Wasser zu Eisensulfat 6,5 bis 7 beträgt.

Bei der Umsetzung der abgetrennten Ausfällung mit einer basischen Eisen(II)verbindung verwendet kann diese auch in Form eines natürlichen Erzes wie Siderit umgesetzt werden. Es können hierzu aber auch Eisen(II)verbindungen, die Bestandteil eines industriellen Abfallproduktes sind, verwendet werden.

Bei Verwendung von metallischem Eisen zur Umsetzung mit der abgetrennten Ausfällung wird bevorzugt metallisches Eisen einer mittleren Teilchengröße von 5 mm oder kleiner, besonders bevorzugt Eisen(pulver) einer mittleren Teilchengröße von 100 □ m oder kleiner, verwendet.

Der Start der Reaktion kann durch eine Beheizung, z.B. mit (Direkt-)Dampf beschleunigt werden. Die Reaktion selbst ist exotherm. Bei Verwendung von grobem Eisen dauert die Reaktion länger. In diesem Fall müssen ggf. Wasserverluste infolge Verdampfung und Wärmeverluste durch Zufuhr von Dampf ausgeglichen werden. Die Reaktion mit Siderit verläuft langsamer und ohne auffällige Wärmetönung. Auch hier muss durch Zufuhr von Wärme z.B. durch Direktdampf der Wärme- und Wasserverlust ausgeglichen werden.

Die Regelung der Dampfzufuhr und / oder Wasserzufuhr kann anhand der Temperatur bzw. Viskosität (z.B. durch Messung der Stromaufnahme des Rührwerks) gesteuert werden. Je nach Korngröße des verwendeten Eisens bzw. des Siderits beträgt die Reaktionszeit wenige Minuten (Verwendung von Eisenpulver: 10 □ m) bis zu einigen Stunden (Verwendung von Eisengranalien: 3mm oder Siderit Fraktion: < 1mm).

Die Reaktion wird in der Regel unter Normaldruck durchgeführt.

Technisch kann die Umsetzung der abgetrennten Ausfällung mit Wasser und metallischem Eisen oder einer basischen Eisen(II)verbindung und Wasser in einem Rührbehälter erfolgen, in den kontinuierlich oder diskontinuierlich die Komponenten abgetrennte Ausfällung, Eisen bzw. basische Eisen(II)verbindung und Wasser eingebracht werden. Es entsteht eine pastöse Masse die z.B. auf einer Kühlstrecke als Pellets zur Erstarrung gebracht werden kann. Eine andere Möglichkeit ist das Verblasen mit kalter Luft. Je nach Reaktivität des Neutralisationsmittels kann auch ein Kneter (Doppelpaddelschnecke oder ähnliches) für die Reaktion und die Erstarrung eingesetzt werden.

Erfolgt die Umsetzung der abgetrennten Ausfällung mit metallischem Eisen oder einer basischen Eisen(II) verbindung kontinuierlich, so kann der nicht reagierte Anteil an Eisen bzw. basischer Eisenverbindung aus dem Überlauf abgeschieden und zurückgeführt wird. Wird hierbei metallisches Eisen zur Umsetzung verwendet, so kann die Abscheidung des Eisens durch einen Magnetabscheider erfolgen.

Die Reduzierung der an der abgetrennten Ausfällung anhaftenden Schwefelsäuremenge nach Aufkonzentrierung der Gebrauchtschwefelsäure und Abtrennung der Ausfällung von der aufkonzentrierten Gebrauchtschwefelsäure kann erfindungsgemäß auch durch Verdrängen der Schwefelsäure mit Druckluft erfolgen.

Ebenso kann zur Reduzierung der an der abgetrennten Ausfällung anhaftenden Schwefelsäuremenge nach Aufkonzentrierung der Gebrauchtschwefelsäure und Abtrennung der Ausfällung von der aufkonzentrierten Gebrauchtschwefelsäure erfindungsgemäß auch eine Teilneutralisation oder Neutralisation durch Zugabe von pulverförmigen alkalischen Verbindungen, insbesondere CaCO₃, CaO, Ca(OH)₂, MgO und/oder Mg(OH)₂ oder deren Anschlämmungen, wie Kalkmilch, erfolgen.

Die Zugabe dieser pulverförmigen alkalischen Verbindungen kann auch nach einem der oben beschriebenen Verfahrensschritte zur Reduzierung der an der abgetrennten Ausfällung anhaftenden Schwefelsäuremenge, wie Waschen mit einem Waschmedium, wie Dünnsäure, gesättigte FeSO₄-Lösung, verdünnte FeSO₄-haltige wässrige Lösungen oder Wasser oder Verdrängen der Schwefelsäure mit Druckluft oder Waschen mit Wasserdampf oder Umsetzen mit Eisen oder einer basischen Eisen(II)verbindung und Wasser, zur Teilneutralisation oder Neutralisation der Restsäure in der abgetrennten Ausfällung erfolgen.

Nach der Reduzierung der an der abgetrennten Ausfällung anhaftenden Schwefelsäuremenge oder nach der Teilneutralisation oder Neutralisation der Restsäure in der abgetrennten Ausfällung durch Zugabe von pulverförmigen alkalischen Verbindungen wird vorzugsweise eine definierte Menge an Wasser, einer wässrigen Salzlösung oder einer verdünnten Schwefelsäure zugegeben, so dass eine Granulierung erfolgen kann. Die Zugabe kann besonders vorteilhaft im Filteraggregat durch Verdrängungswäsche der Dünnsäure mit Wasser erfolgen, was dann zusätzlich die zurück gewonnene Säuremenge erhöht, ohne die zu verdampfende Wassermenge nennenswert zu erhöhen. Optional kann auch die benötigte Wassermenge durch die Zugabe von feuchtem Grünsalz erfolgen. Diese Variante bietet den Vorteil, dass dann die Trocknung des Grünsalzes ohne Energie- oder Chemikalienaufwand erfolgt und ein granuliertes oder pulverförmiges Produkt erhalten wird.

Die dabei zugegebene Wassermenge kann 100 bis 550 mol-% bezogen auf das in der abgetrennten Ausfällung enthaltene Eisen(II)sulfat-Monohydrat betragen. In einer besonders bevorzugten Ausführung beträgt die zugegebene Wassermenge 250 bis 350 mol-% bezogen auf das in der abgetrennten Ausfällung enthaltene Eisen(II)sulfat-Monohydrat.

Die Granulierung und die Steuerung der Granaliengröße erfolgt vorzugsweise durch mechanische Verformung oder durch Verblasen mit Luft oder durch Versprühen mit einer Düse oder einer Drehscheibe oder durch Abkühlen, z.B. durch eine Kühlwalze oder ein Kühlband oder durch Fallen oder Wirbeln in kalter Luft. Je nach eingestellten Prozessparametern erhält man dabei feste Blöcke, grobe oder feine Granalien oder pulverförmiges Schüttgut.

Die nach den obigen Verfahren großtechnisch besonders kostengünstig, energiesparend und in konstanter Qualitäterhaltene eisen(II)sulfathaltig Ausfällung kann zur Reduktion von Chromatin Zementverwendet werden.

Die verwendete Ausfällung weist eine mittlere Kristallitgröße von weniger als 2 µm, bevorzugt zwischen 0,1 und 1,0 µm auf. In einigen besonderen Ausführungsformen liegt die mittlere Kristallitgröße im Bereich von 0,2 und 0,5 µm.

Die mittlere Kristallitgröße wird wie folgt bestimmt: Die Proben werden unter Kapton-Folie (zum Ausschluss von Feuchtigkeit) an einem Philips PW 1800 Diffraktometer gemessen. Die Bestimmung der Kristallitgröße erfolgt mittels des Philips Fit-Programms aus dem 100% Reflex des gemessenen Spektrums.

Für die Ausfällung (Eisen(II)sufat-Monohydrat) wurde aus dem Messbereich 25°-28° 2theta der 100%-Reflex hkl 200 bei 25,879° 2theta zur Kristallitgrößenbestimmung verwendet.

Für das dem Stand der Technik entsprechende Reduktionsmittel, Grünsalz der Firma KRONOS (Eisen(II)sufat-Heptahydrat), wurde aus dem Messbereich 17,5°-18,75° 2theta der 100%-Reflex hkl 111 bei 18,088° 2theta zur Kristallitgrößenbestimmung verwendet.

Die Kristallitgröße ist dabei nicht identisch mit der Größe der Primärpartikel wie sie aus Elektronenmikroskopaufnahmen erkennbar ist. Jedoch zeigen sich auch in den Elektronenmikroskopaufnahmen deutliche Unterschiede: die mittlere Primärpartikelgröße für die verwendete Ausfällung beträgt ca. 5 µm; für das dem Stand der Technik entsprechende Reduktionsmittel (Grünsalz der Firma KRONOS) beträgt die mittlere Primärpartikelgröße ca. 50 µm.

Die Kristallitgröße dieser eisen(II)sulfathaltigen Metallsulfate ist im Gegensatz zum herkömmlich erhaltenen Eisen(II)sulfat-Heptahydrat (Grünsalz) deutlich geringer (0,3 gegenüber von >>3 µm in herkömmlichem Grünsalz) und die Gehalte an Metallen außer Eisen höher als in Grünsalz.

Die verwendete Ausfällung enthält vorzugsweise 5 bis 15 Gew.%, besonders bevorzugt 7 bis 13 Gew.% Titan, bezogen auf Eisen und / oder vorzugsweise 1,5 bis 4,0 Gew.%, besonders bevorzugt 2,0 bis 3,5 Gew.% Mangan, bezogen auf Eisen.

Ein Vorteil der Verfahren besteht darin, dass neben Eisensulfat alle aus der aufkonzentrierten Schwefelsäure auskristallisierenden Metallsulfate, z.B. Mangan(II)sulfat einer Verwertung zugeführt werden. Die in der Ausfällung in geringen Mengen enthaltenen weiteren Metall-sulfate zeigen keine nachteiligen Auswirkungen und werden in der Zementmatrix nach dem Aushärten dauerhaft eingebunden. So kann beispielsweise durch die verwendete Ausfällung trotz des zusätzlichen Einbringens von Chrom in den Zement der Gehalt an unerwünschtem löslichem Chrom wirksam und in ausreichendem Maße verringert werden.

Die Wirksamkeit des erfindungsgemäßen eisen(II)sulfathaltigen Reduktionsmittels ist bei Zusatz zu der Zement-Wasser-Mischung bei der Verarbeitung von Zement vergleichbar mit derjenigen von herkömmlich verwendetem Grünsalz (siehe Beispiel 2). Es werden 0,01 bis 5,0 Gew.-%, besonders bevorzugt 0,2 bis 1,5 Gew.-% des erfindungsgemäßen eisen(II)sulfathaltigen Reduktionsmittels eingesetzt. Die Zugabe des eisen(II)sulfathaltigen Reduktionsmittels kann dabei auch als Lösung oder Suspension erfolgen.

Bei Verwendung des erfindungsgemäßen eisen(II)sulfathaltigen Reduktionsmittels kann bei geringer Zugabemenge nach kurzer Lagerzeit zwar eine im Vergleich zum Stand der Technik geringere Wirkung festgestellt werden (s. Beispiel 3: Zusatz von 0,3 Gew.-% bzw. 0,6 Gew.-%). Überraschenderweise zeigt das erfindungsgemäße eisen(II) sulfathaltige Reduktionsmittel jedoch mit zunehmender Lagerungszeit nicht die allgemein bekannte immer weiter abnehmende Reduktionswirkung, sondern wieder eine zunehmende Reduktionswirkung. Im Vergleich zu den Reduktionsmitteln des Standes der Technik zeigt das erfindungsgemäße Reduktionsmittel somit keine signifikante Abnahme der Reduktionswirkung mit zunehmender Lagerzeit, insbesondere nicht nach einem Monat.

Das erfindungsgemäße eisen(II)sulfathaltigen Reduktionsmittel umfasst konventionelles Grünsalzzusammen mit der Ausfällung. Besonders günstig kann eine Mischung mit feuchtem Grünsalz sein.

Es ist weiterhin möglich, das eisen(II)sulfathaltige Reduktionsmittel oder eine Mischung des eisen(II)sulfathaltigen Reduktionsmittels mit Grünsalz mit weiteren inerten anorganischen und/oder organischen Verbindungen zu mischen, um gezielt günstige Förder- und/oder Lagereigenschaften einzustellen.

Das erfindungsgemäße eisen(II)sulfathaltige Reduktionsmittel kann entweder
- dem gemahlenen Zement bei der Abfüllung in Silos oder Säcke,
- dem gemahlenen Zement unmittelbar nach der Mahlung und vor der Zuführung zum Silo,
- unmittelbar vor der Verladung in Silo-Lkw zugemischt werden oder erst unmittelbar vor, während oder nach dem Anmachen des Zements mit Wasser zugegeben werden.

Die Erfindung stellt auch eine Zubereitung umfassend eine Mischung aus Zement und der erfindungsgemäße verwendeten Ausfällung bereit, wobei die Zubereitung 0,01 bis 5,0 Gew.-%, besonders bevorzugt 0,2 bis 1,5 Gew.-%, der Ausfällung enthält. Eine weitere erfindungsgemäße Zubereitung enthält Zement, Wasser und die erfindungsgemäße verwendete Ausfällung wobei die Zubereitung bezogen auf Zement 0,01 bis 5,0 Gew.-%, bevorzugt 0,2 bis 1,5 Gew.-%, der Ausfällung enthält.

### 1 Beispiele

### Herstellungsbeispiel 1

### Herstellung und Charakterisierung des eisen(II)sulfethaltigen Reduktionsmittels

Die bei der Herstellung von Titandioxid nach dem Sulfatverfahren anfallende Dünnsäure mit einem Gehalt an Schwefelsäure von 23,5% und Eisen von 3,8% wurde in einer dreistufigen Zwangsumlaufverdampferanlage mit abgestuft verstärktem Vakuum bis auf einen Schwefelsäuregehalt von 48% (entspricht einer Schwefelsäurekonzentration in der Flüssigphase von 70%) eingedampft. Während des Eindampfens kristallisiert ein Grossteil des Eisensulfates als Monohydrat aus. Im Anschluss an die Eindampfung wurde die erhaltene Slurry einer Reife unterzogen, bei der in einer Rührkaskade ihre Temperatur von ca. 90°C auf 60°C abgesenkt wurde. Danach wurde die Slurry in einer Kerzenfilteranlage unter Druck filtriert und der Filterkuchen mit Druckluft von anhaftender Schwefelsäure teilweise befreit. Man erhält einen krümeligen, trockenen gut handhabbaren Filterkuchen (Filtersalz), der als eisen(II)sulfathaltiges Reduktionsmittel verwendet werden kann.

Die Bestimmung der Kristallitgröße erfolgte röntgenographisch. Die Kristallitgröße von herkömmlichem Grünsalz (KRONOS) beträgt >>3 µm (die Bestimmung der Kristallitgröße für Grünsalz ist mit dieser Technik nicht eindeutig zu ermitteln; sie liegt jedoch auf jeden Fall weit höher als 3 µm).

**Tabelle 1**

| | eisen(II)sulfathaltig es Reduktionsmittel (ungewaschen)/% |
|---|---|
| Fe(II) | 15,05 |
| Fe (gesamt) | 15,5 |
| Al | 0,28 |
| Ca | 0,056 |
| Cr | 0,048 |
| Mg | 1,5 |
| Mn | 0,37 |
| Na | 0,22 |
| Nb | < 0,005 |
| Ti | 1,4 |
| V | 0,13 |
| freie H₂SO₄ | 24,75 |
| Kristallitgröße | 0,33 µm |

### Herstellungsbeispiel 2 a)

Jeweils 200 g Filtersalz mit einem Gehalt von 25,3 % an freier Schwefelsäure wurden bei 60 °C mit heißer Dünnsäure auf einer vorgewärmten Nutsche angemaischt und die heiße Suspension scharf abgesaugt. Im Gegensatz zur Wäsche mit kalter verdünnter Schwefelsäure wurde in allen Fällen ein nicht thixotropes rieselfähiges Filtersalz erhalten.

**Tabelle 2**

| Versuchsnummer | Zugegebene Menge an Dünnsäure [g] | H₂SO₄ im Filterkuchen [%] | Thixotropie |
|---|---|---|---|
| Filtersalz vor Wäsche | - | 25,3 | Nein |
| 1 | 100 | 20,7 | Nein |
| 2 | 200 | 12,9 | Nein |
| 3 | 300 | 11,3 | Nein |

### Herstellungsbeispiel 2 b)

Die Wäsche wurde wie in Beispiel 2 a), Versuch 3 durchgeführt. Anschließend erfolgte die Neutralisation der Restsäure im Filtersalz durch Untermischen von 10 Gew.-% CaCO₃.

### Herstellungsbeispiel 3 a)

Die bei der Herstellung von Titandioxid nach dem Sulfatverfahren anfallende Dünnsäure mit einem Gehalt an Schwefelsäure von 23,5% und Eisen von 3,8% wurde in einer dreistufigen Zwangsumlaufverdampferanlage mit abgestuft verstärktem Vakuum bis auf einen Schwefelsäuregehalt von 48% (entspricht einer Schwefelsäurekonzentration in der Flüssigphase von 70%) eingedampft. Während des Eindampfens kristallisiert ein Grossteil des Eisensulfates als Monohydrat aus. Im Anschluss an die Eindampfung wurde die erhaltene Slurry einer Reife unterzogen, bei der in einer Rührkaskade ihre Temperatur von ca. 90°C auf 60°C abgesenkt wurde. Nach Filtration der Slurry über eine Filterpresse werden 2 kg Filtersalz erhalten mit einem Gehalt von 23 % an freier Schwefelsäure. Nach dem Filtrationsvorgang wird direkt, ohne die Presse zu entleeren mit dem dreifachen Kammervolumen der Presse mit 60 °C heißem Wasser gewaschen und nochmals abgepresst und trockengeblasen. Es wird ein rieselfähiges eisen(II)sulfathaltiges Reduktionsmittel mit einem pH-Wert von 1,8 erhalten.

Durch Zugabe von 6 Gew.-% pulverförmigem Ca(OH)₂ wird ein Material mit einem pH-Wert von 2,2 erhalten. Das erhaltene eisen(II)sulfathaltige Reduktionsmittel weist gute rheologische Eigenschaften auf und ist aufgrund seines pH-Wertes von > 2 kein Gefahrgut.

Die Bestimmung des pH-Wertes erfolgt im Eluat von 10 g Salz in 1000 g H₂O mittels einer pH-Einstab-Meßkette mit Ag/AgCl-Referenzsystem der Fa. Schott, Typ H6580 an einem pH-Meter der Fa. Knick, Typ 765 Calimatic.

### Herstellungsbeispiel 3 b)

Das wie in Beispiel 3 a) nach Filtration der Slurry über eine Filterpresse erhaltene Filtersalz mit einem Gehalt von 23 % an freier Schwefelsäure wurde ohne die Filterpresse zu entleeren direkt anschließend mit Pressluft trockengeblasen, abgepresst und nochmals trocken geblasen.

Es wird ein rieselfähiges eisen(II)sulfathaltiges Reduktionsmittel mit einem pH-Wert von 1,5 erhalten. Durch Zugabe von 15 Gew.-% pulverförmigem Ca(OH)₂ wird ein Material mit einem pH-Wert von 2,6 erhalten. Das erhaltene eisen(II)sulfathaltige Reduktionsmittel weist gute rheologische Eigenschaften auf und ist aufgrund seines pH-Wertes von > 2 kein Gefahrgut.
Die Bestimmung des pH-Wertes erfolgt analog zu Beispiel 3 a).

### Herstellungsbeispiel 4

Die Wäsche wurde wie in Beispiel 2 durchgeführt. Ein Teil des nach Beispiel 2, Versuch 3 erhaltenen gewaschenen Filtersalzes wurden mit zwei Teilen Eisen(II)sulfat-heptahydrat vermischt und über mehrere Stunden in Bewegung gehalten. Man erhält ein Pulver, das keine thixotropen Eigenschaften aufweist. Alternativ kann eine Mischung im oben beschriebenen Verhältnis bei 80°C durchgeführt werden. Man erhält eine viskose Schmelze, die bei Abkühlung zu einem harten Kuchen erstarrt.

### Herstellungsbeispiel 5

500 g Filtersalz mit einem Gehalt von 25,3 % an freier Schwefelsäure wurden in einer mit Dampf beheizbaren Druckfilternutsche vorgeheizt und überhitzter Dampf bei geringem Überdruck durch den Filterkuchen geleitet, bis die Menge an schwefelsaurem Kondensat deutlich geringer wurde.

**Tabelle 3**

| Versuchstemperatur (°C) (Filtersalz- und Dampf) | H₂SO₄ im Filterkuchen (% w/w) | H₂SO₄ im Kondensat der Dampfwäsche (% w/w) | FeSO₄ im Kondensat der Dampfwäsche (% w/w) |
|---|---|---|---|
| Filtersalz vor Wäsche | 25,3 | - | - |
| 105 | 2,2 | 24,8 | 12,1 |
| 110 | 3,5 | 34,1 | 7,2 |
| 120 | 4,6 | 47,6 | 4,1 |

### Herstellungsbeispiel 6

Die Wäsche wurde bei 120°C wie in Beispiel 5 durchgeführt. Anschließend erfolgte die Neutralisation der Restsäure im Filterkuchen durch Zugabe von 5 Gew.-% CaCO₃.

### Herstellungsbeispiel 7

Jeweils 30 g Filtersalz mit einem Eisengehalt von 16,2 % und einem Gehalt an freier Schwefelsäure von 20,3 % wurden bei Temperaturen oberhalb 60 °C mit je 7,5 g Wasser angeteigt und unterschiedlichen Mengen metallischem Eisen umgesetzt. Dabei wurde sowohl Eisenpulver mit einer mittleren Teilchengröße von 10 µm als auch Eisengranalien mit einer Korngröße von 1-2 mm eingesetzt. Mit zunehmender Korngröße verlängerte sich die erforderliche Zeit bis zur vollständigen Auflösung des Eisens.

Eine Übersicht gibt Tabelle 4.

**Tabelle 4**

| Filtersalz (g) | Fe(met) (g) | Wasser (g) | Reaktions Zeit (min) | Reaktions Temp (°C) | Produkt (g) | % Fe im Prod. | | % H₂SO₄ | |
|---|---|---|---|---|---|---|---|---|---|
| | | | | | | Analyse | Theor. | Analyse | Theor. |
| Rohstoff | | | | | | 16,20 | | 20,30 | |
| 30 | 3(*1 | 7,5 | 15 | 70(*3 | 38,9 | 20,24 | 20,21 | 2,33 | 2,11 |
| 30 | 3(*1 | 7,5 | 15 | 80 | 38,6 | 20,39 | 20,36 | 2,18 | 2,13 |
| 30 | 2,5(*1 | 7,5 | 15 | 80 | 39,5 | 19,05 | 18,63 | 4,09 | 4,30 |
| 30 | 2(*1 | 7,5 | 15 | 80 | 38,8 | 17,65 | 17,68 | 6,43 | 6,64 |
| 30 | 3(*2 | 7,5 | 360 | 80 | 38,5 | n.b. | 20,58 | n.b. | 2,15 |
| *1 Eisenpulver, reinst. (Teilchengröße: 10µm, Fa. Merck) | | | | | | | | | |
| *2 Eisengranalien, techn. (Teilchengröße: ca. 1 - 2 mm) | | | | | | | | | |
| *3 nach 15 min waren noch geringe Mengen Eisenpulver erkennbar | | | | | | | | | |

### Herstellungsbeispiel 8

Die Reaktion wurde wie in Beispiel 7 durchgeführt. Ein Produkt mit einem Restsäure-Gehalt von 4,09% wurde pulverisiert und die Restsäure im Filtersalz durch Zugabe von 5 Gew.-% CaCO₃ neutralisiert. Der wässrige Auszug des so erhaltenen Pulvers zeigt keine sauren Eigenschaften.

### Beispiel 1

### Zusatz des nach Herstellungsbeispiel 1 hergestellten eisen(II)sulfathaltigen Reduktionsmittels zu Zement beim Mischen mit Wasser

Die Mischen des Zements mit Wasser erfolgte nach der in TRGS 613 beschriebenen Methode zur Probenvorbereitung. Nach dem Mischen von Wasser und Zement wurde das eisen(II)-sulfathaltige Reduktionsmittel zugegeben und dann 15 Minuten gerührt.

Zur Bestimmung des löslichen Chroms wurde in Abweichung zu TRGS 613 die fünffache Menge (aber gleiches Verhältnis Zement - Wasser) eluiert und das gelöste Chrom mittels ICP-OES bestimmt.

Es zeigt sich, dass bei einer Zugabemenge des eisen(II)sulfathaltigen Reduktionsmittels von 0,10 Gew.-% oder mehr der Gehalt an löslichem Chrom unter der Nachweisgrenze liegt.

**Tabelle 5**

| **Zusatz Reduktionsmittel / Gew.-%** | **FeSO₄/Gew.-% (berechnet)** | **Crim Eluat/mg/l** | **Cr löslich/ppm** |
|---|---|---|---|
| 0 | 0 | 1,5 | 6 |
| 0,05 | 0,021 | 0,69 | 2,76 |
| 0,10 | 0,042 | <0,1 | <0,4 |
| 0,30 | 0,126 | <0,1 | <0,4 |
| 0,50 | 0,210 | <0,1 | <0,4 |
| 1,00 | 0,420 | <0,1 | <0,4 |

Zum Vergleich wurde der Versuch mit herkömmlichem Grünsalz (= Eisen(II)sulfat-Heptahydrat der Firma KRONOS) durchgeführt:

**Tabelle 6**

| **Zusatz Grünsalz / Gew.-%** | **FeSO₄/Gew.-% (berechnet)** | **Crim Eluat/mg/l** | **Cr löslich/ppm** |
|---|---|---|---|
| 0 | 0 | 1,5 | 6 |
| 0,05 | 0,022 | 0,19 | 0,76 |
| 0,10 | 0,043 | 0,1 | 0,4 |
| 0,30 | 0,130 | <0,1 | <0,4 |

| **Zusatz Grünsalz / Gew.-%** | **FeSO₄/Gew.-% (berechnet)** | **Crim Eluat/mg/l** | **Cr löslich / ppm** |
|---|---|---|---|
| 0,50 | 0,217 | <0,1 | <0,4 |
| 1,00 | 0,434 | <0,1 | <0,4 |

Es zeigt sich, dass bei einer Zugabemenge an herkömmlichem Grünsalz von 0,10 Gew.-% oder mehr der Gehalt an löslichem Chrom an oder unter der Nachweisgrenze liegt.

### Beispiel 2

### Zusatz des nach Herstellungsbeispiel 1 hergestellten eisen(II)sulfathaltigen Reduktionsmittels zu Zement beim Mischen mit Wasser

Es wurden verschiedene Mengen (s. Tabelle 7) an eisen(II)sulfathaltigem Reduktionsmittel als Zusatz zu gemahlenem Zement gegeben und 1 Stunde im Taumelmischer gemischt. Anschließend wurden die mit dem eisen(II) sulfathaltigen Reduktionsmittel versetzten Zementproben über unterschiedlich lange Zeiträume bei Raumtemperatur in luftdicht verschlossenen Gefäßen gelagert. Der Test auf reduzierende Wirkung erfolgte nach TRGS 613 durch Mischen des Zements mit Wasser. Jedoch wurde in Abweichung zu TRGS 613 die fünffache Menge (aber gleiches Verhältnis Zement - Wasser) eluiert und das gelöste Chrom mittels ICP-OES bestimmt.

**Tabelle 7**

| **Reduktionsmittel** | **Menge** | **FeSO₄** | **Cr im Eluat / mg/l** | | | |
|---|---|---|---|---|---|---|
| | / Gew.-% | / Gew.-% (bere chnet) | 1 Tag Lagerzeit | 1 Woche Lagerzeit | 2 Wochen Lagerzeit | 4 Wochen Lagerzeit |
| Kein Zusatz | 0 | 0 | 1,5^{a)} | 1,5^{a)} | 1,5^{a)} | 1,5^{a)} |
| eisen(II) sulfathaltiges Reduktionsmittel | 0,30 | 0,126 | 0,64 | 1,64 | 0,66 | 0,62 |
| eisen(II) sulfathaltiges Reduktionsmittel | 0,60 | 0,252 | 0,28 | 0,23 | 0,2 | <0,1 |
| eisen (II) sulfathaltiges Reduktionsmittel | 0,90 | 0,378 | <0,1 | <0,1 | <0,1 | <0,1 |
| eisen(II) sulfathaltiges Reduktionsmittel | 1,50 | 0,630 | <0,1 | <0,1 | <0,1 | <0,1 |
| Zum Vergleich: Grünsalz (KRONOS) | 0,30 | 0,130 | <0,1 | <0,1 | <0,1 | <0,1 |
| ^{a)} Wert ist nicht zeitabhängig | | | | | | |

Der Grenzwert von 0,5 mg/l Chrom im Eluat wird bei Zusatz von 0,30 Gew.-% an herkömmlichem Grünsalz (KRONOS) sowie bei Zusatz von 0,60 Gew.-% oder mehr des eisen(II)sulfathaltigen Reduktionsmittels unterschritten. Daneben zeigt sich, dass bei Zusatz von 0,60 Gew.-% des eisen(II)sulfathaltigen Reduktionsmittels nach einer Lagerungsdauer von 4 Wochen der Gehalt an löslichem Chrom unter der Nachweisgrenze liegt, obwohl zwischenzeitlich höhere Gehalte ermittelt wurden.

### Beispiel 3

Eine Probe des nach Herstellungsbeispiel 1 hergestellten eisen(II)sulfathaltigen Reduktionsmittels (Filtersalz) wurde mit 10 Gew.-% CaCO₃ versetzt.

### Bestimmung der Wirksamkeit in Bezug auf die Chromatreduktion in Zement:

Zur Bestimmung der Wirksamkeit des so gewonnenen eisen(II)sulfathaltigen Reduktionsmittels wurden einem Prüfzement mit einem Gehalt an wasserlöslichem Chromat von 14,31 µg Cr(VI)/g Zement [= 14,31 ppm Cr(VI)] zunächst 0,3, 0,5, 0,7 und 1,0 M.-% des eisen(II)sulfathaltigen Reduktionsmittels zugesetzt. Sein Chromatgehalt wurde anschließend nach der Analysevorschrift im Anhang der TRGS 613 bestimmt. Der Reduktionserfolg war bei einer Dosierung von 0,3 % eisen(II)sulfathaltigen Reduktionsmittels (mittlere Zugabemenge für die Zugabe von Fe(II)-sulfat-Präparaten bei deutschen Zementen) nur gering. Erst bei einer Dosierung von 0,7 % lag der Gehalt wasserlöslichen Chromats unterhalb des in der TRGS 613 genannten Grenzwertes von 2 ppm. Bei einer Dosierung von 1,0 % eisen(II)sulfathaltigen Reduktionsmittel zum Prüfzement lag der Gehalt wasserlöslichen Chromats unterhalb der Bestimmungsgrenze.

### Bestimmung der Zementnormdruckfestigkeit nach DIN EN 196-1:

Die Bestimmung der Zementnormdruckfestigkeit erfolgte an 4cmX4cmX16cm-Normmörtelprismen nach DIN EN 196-1 im Alter von 1, 2, 7 und 28 Tagen (jeweils sechs Messwerte je Prüfalter). Der oben beschriebene Prüfzement wurde dazu mit 1,0 % des eisen(II)sulfathaltigen Reduktionsmittels versetzt. Der Prüfzement ohne Eisen(II)sulfathaltigen Reduktionsmittel diente dabei als Referenz. Die Ergebnisse der Normdruckfestigkeitsprüfung stimmen für die beiden Zemente (mit und ohne Eisen(II)sulfathaltigen Reduktionsmittel) sehr gut überein.

### Bestimmung Erstarrungszeiten nach DIN EN 196-3:

Zur Bestimmung des Erstarrungsbeginns wurde wiederum der in oben beschriebene Prüfzement mit und ohne eisen(II)sulfathaltiges Reduktionsmittel verwendet. Durch die Zugabe von 1,0 % eisen(II)sulfathaltigen Reduktionsmittel verringern sich die Zeiten für den Erstarrungsbeginn und das Erstarrungsende jeweils etwa um ein Drittel. Ursache dafür ist die signifikante Erhöhung des Sulfatgehaltes im bereits Sulfatträger-optimierten Zement.

### Bestimmung des Wasseranspruch nach DIN EN 196-3:

Die oben beschriebenen Zemente mit und ohne eisen(II)sulfathaltiges Reduktionsmittel weisen den gleichen Wasseranspruch zur Erzielung der Mörtelnormsteife nach DIN EN 196-3 auf.

Die technisch relevanten Eigenschaften Normdruckfestigkeit und Wasseranspruch des eingesetzten Prüfzements werden auch bei sehr hohen, für eine ausreichende Chromatreduktion erforderliche Dosierung des eisen(II) sulfathaltigen Reduktionsmittels von 1,0 % nicht beeinflusst. Die Erstarrungszeiten des Prüfzements werden allerdings durch das eisen(II)sulfathaltige Reduktionsmittel jeweils um ein Drittel verringert. Dieses schnellere Erstarren ist auf den erhöhten Eintrag von Sulfat durch die hohe Dosierung des eisen(II)sulfathaltigen Reduktionsmittels zurückzuführen.

### Beispiel 4

Wie in Beispiel 3 wurde Filtersalz mit 10 Gew.-% CaCO₃ versetzt. Das teilneutralisierte Filtersalz wurde mit Grünsalz im Verhältnis 1:1 bzw. 2:1 gemischt und 0,5 bzw. 0,7% dieser Mischungen werden einem Prüfzement, wie in Beispiel 11 beschrieben, zugegeben.
Die erhaltene Mischung zeigt gute rheologische Eigenschaften. Bei beiden Dosierungen (0,5% und 0,7%) lag der Gehalt wasserlöslichen Chromats unterhalb des in der TRGS 613 genannten Grenzwertes von 2 ppm.

## Patentansprüche

1. Eisen(II)sulfathaltiges Reduktionsmittel, umfassend Grünsalz und eine eisen(II)sulfathaltige Ausfällung, wobei die eisen(II)sulfathaltige Ausfällung Eisen(II)sulfat-Monohydrat enthält und erhältlich ist durch ein Verfahren, umfassend die Aufkonzentrierung einer eisen(II)sulfathaltigen Gebrauchtschwefelsäure aus der Titandioxidherstellung nach dem Sulfatverfahren und die Abtrennung der Schwefelsäure von der erhaltenen Ausfällung.

2. Eisen(II)sulfathaltiges Reduktionsmittel nach Anspruch 1, **dadurch gekennzeichnet, dass** die eisen(II)sulfathaltige Ausfällung eine mittlere Kristallitgröße von höchstens 1 µm, bevorzugt zwischen 0,1 und 1,0 µm, besonders bevorzugt zwischen 0,2 und 0,5 µm, aufweist.

3. Eisen(II)sulfathaltiges Reduktionsmittel nach einem oder mehreren der vorhergehenden Ansprüche, **dadurch gekennzeichnet, dass** die eisen(II)sulfathaltige Gebrauchtschwefelsäure einen Gehalt an Titan von weniger als 1,5 Gew.-%, bevorzugt weniger als 0,8 Gew.-%, aufweist.

4. Eisen(II)sulfathaltiges Reduktionsmittel nach einem der vorhergehenden Ansprüche, **dadurch gekennzeichnet, dass** die abgetrennte Ausfällung 40 bis 60 Gew.-% Eisen(II)sulfat-monohydrat, 3 bis 10 Gew.-% weitere Metallsalze, 15 bis 30 Gew.-% Schwefelsäure und 10 bis 13 Gew.-% Wasser enthält.

5. Eisen(II)sulfathaltiges Reduktionsmittel nach einem der Ansprüche 1 bis 4, **dadurch gekennzeichnet, dass** bei der Herstellung der eisen(II)sulfathaltigen Ausfällung nach der Abtrennung der Schwefelsäure eine Reduzierung der an der abgetrennten Ausfällung anhaftenden Schwefelsäuremenge durch Waschen mit Wasser, Dünnsäure, gesättigter FeSO₄-Lösung oder verdünnten FeSO₄-haltigen wässrigen Lösungen erfolgt.

6. Eisen(II)sulfathaltiges Reduktionsmittel nach einem der Ansprüche 1 bis 4, **dadurch gekennzeichnet, dass** bei der Herstellung der eisen(II)sulfathaltigen Ausfällung nach der Abtrennung der Schwefelsäure eine Reduzierung der an der abgetrennten Ausfällung anhaftenden Schwefelsäuremenge durch Verdrängen mit Druckluft oder Waschen mit Wasserdampf erfolgt.

7. Eisen(II)sulfathaltiges Reduktionsmittel nach einem der Ansprüche 1 bis 4, **dadurch gekennzeichnet, dass** bei der Herstellung der eisen(II)sulfathaltigen Ausfällung nach der Abtrennung der Schwefelsäure eine Reduzierung der an der abgetrennten Ausfällung anhaftenden Schwefelsäuremenge mit Wasser und metallischem Eisen oder einer basischen Eisen(II)verbindung bei einer Temperatur oberhalb von 60 °C erfolgt.

8. Eisen(II)sulfathaltiges Reduktionsmittel nach einem der Ansprüche 1 bis 4, **dadurch gekennzeichnet, dass** bei der Herstellung der eisen(II)sulfathaltigen Ausfällung nach der Abtrennung der Schwefelsäure eine Reduzierung der an der abgetrennten Ausfällung anhaftenden Schwefelsäuremenge durch eine Teilneutralisation oder Neutralisation durch Zugabe von pulverförmigem MgO und/oder Mg(OH)₂ oder deren Anschlämmungen erfolgt.

9. Eisen(II)sulfathaltiges Reduktionsmittel nach einem der Ansprüche 5 bis 8, **dadurch gekennzeichnet, dass** nach der Reduzierung der an der abgetrennten Ausfällung anhaftenden Schwefelsäuremenge oder nach der Teilneutralisation oder Neutralisation der Restsäure in der abgetrennten Ausfällung eine definierte Menge an Wasser, einer wässrigen Salzlösung oder einer verdünnten Schwefelsäure zugegeben wird und eine Granulierung erfolgt.

10. Verwendung eines eisen(II)sulfathaltigen Reduktionsmittels nach einem der Ansprüche 1 bis 9 zur Reduktion des löslichen Chromatgehaltes in Zement.

11. Verwendung eines eisen(II)sulfathaltigen Reduktionsmittels, umfassend eine eisen(II)sulfathaltige Ausfällung, die Eisen(II)sulfat-Monohydrat enthält und herstellbar ist durch ein Verfahren, umfassend die Aufkonzentrierung einer eisen(II)sulfathaltigen Gebrauchtschwefelsäure aus der Titandioxidherstellung nach dem Sulfatverfahren und die Abtrennung der Schwefelsäure von der erhaltenen Ausfällung, wobei die Ausfällung einen Titangehalt von 5 bis 15 Gew.-%, bezogen auf Eisen, und eine mittlere Kristallitgröße von höchstens 1 um aufweist, zur Reduktion des löslichen Chromatgehaltes in Zement.

12. Verwendung nach einem der Ansprüche 10 oder 11, **dadurch gekennzeichnet, dass** dem Zement 0,01 bis 5,0 Gew.-%, bevorzugt 0,2 bis 1,5 Gew.-%, der eisen(II)sulfathaltigen Ausfällung zugegeben werden.

13. Verwendung nach einem der Ansprüche 10 bis 12, **dadurch gekennzeichnet, dass** das eisen(II)sulfathaltige Reduktionsmittel dem pulverförmigen Zement nach dem Mahlen und vor oder beim Abfüllen in Verpackungen oder Schüttgutbehälter oder Transportbehälter zugegeben wird.

14. Verwendung nach einem der Ansprüche 10 bis 13, **dadurch gekennzeichnet, dass** das eisen(II)sulfathaltige Reduktionsmittel dem Zement erst bei der Verwendung zugesetzt wird, indem das eisen(II)sulfathaltige Reduktionsmittel dem Zement während des Mischens mit Wasser oder unmittelbar davor oder unmittelbar danach zugemischt wird.

15. Verwendung nach Anspruch 14, **dadurch gekennzeichnet, dass** das eisen(II)sulfathaltige Reduktionsmittel in Form einer Suspension oder Lösung zugemischt wird.

16. Zubereitung aus Zement und wasserlöslichen Metallsulfaten, **dadurch gekennzeichnet, dass** die Zubereitung 0,01 bis 5,0 Gew.-%, bevorzugt 0,2 bis 1,5 Gew.-%, einer eisen(II)sulfathaltigen Ausfällung enthält, die Eisen(II)sulfat-Monohydrat enthält und herstellbar ist durch ein Verfahren, umfassend die Aufkonzentrierung einer eisen(II)sulfathaltigen Gebrauchtschwefelsäure aus der Titandioxidproduktion nach dem Sulfatverfahren und die Abtrennung der Schwefelsäure von der erhaltenen Ausfällung, wobei die Ausfällung einen Titangehalt von 5 bis 15 Gew.-%, bezogen auf Eisen, und eine mittlere Kristallitgröße von höchstens 1 um aufweist.

## Claims

1. Iron(II) sulphate-containing reducing agent comprising green salt and an iron(II) sulphate-containing precipitate, wherein the iron(II) sulphate-containing precipitate contains iron(II)sulphate monohydrate and is obtainable by a method comprising the concentration of an iron(II) sulphate-containing used sulphuric acid from the production of titanium dioxide according to the sulphate process and the separation of the sulphuric acid from the obtained precipitate.

2. Iron(II) sulphate-containing reducing agent according to claim 1, **characterised in that** the iron(II) sulphate-containing precipitate has an average crystallite size of less than 1 µm, preferably between 0.1 and 1.0 µm, and particularly preferred between 0.2 and 0,5 µm.

3. Iron(II) sulphate-containing reducing agent according to one or more of the preceding claims, **characterised in that** the iron(II) sulphate-containing used sulphuric acid has a titanium content of less than 1.5% by weight, preferably less than 0.8% by weight.

4. Iron(II) sulphate-containing reducing agent according to one of the preceding claims, **characterised in that** the separated precipitate contains 40 to 60% by weight of iron(II) sulphate monohydrate, 3 to 10% by weight of further metal salts, 15 to 30% by weight of sulphuric acid and 10 to 13% by weight of water.

5. Iron(II) sulphate-containing reducing agent according to one of claims 1 to 4, **characterised in that** when producing the iron(II) sulphate-containing precipitate, following separation of the sulphuric acid, reduction of the amount of sulphuric acid adhering to the separated precipitate takes place by washing with water, dilute acid, saturated FeSO₄ solution or diluted FeSO₄ - containing aqueous solutions.

6. Iron(II) sulphate-containing reducing agent according to one of claims 1 to 4, **characterised in that** when producing the iron(II) sulphate-containing precipitate, following separation of the sulphuric acid, reduction of the amount of sulphuric acid adhering to the separated precipitate takes place by displacement with compressed air or by washing with steam.

7. Iron(II) sulphate-containing reducing agent according to one of claims 1 to 4, **characterised in that** when producing the iron(II) sulphate-containing precipitate, following separation of the sulphuric acid, reduction of the amount of sulphuric acid adhering to the separated precipitate takes place with water and metallic iron or an alkaline iron(II) compound at a temperature of greater than 60°C.

8. Iron(II) sulphate-containing reducing agent according to one of claims 1 to 4, **characterised in that** when producing the iron(II) sulphate-containing precipitate, following separation of the sulphuric acid, reduction of the amount of sulphuric acid adhering to the separated precipitate takes place by means of partial neutralisation or neutralisation by adding powdered MgO and/or Mg(OH)₂ or elutriations thereof.

9. Iron(II) sulphate-containing reducing agent according to one of claims 5 to 8, **characterised in that** following reduction of the amount of sulphuric acid adhering to the separated precipitate or following partial neutralisation or neutralisation of the residual acid in the separated precipitate, a defined amount of water, an aqueous saline solution or a diluted sulphuric acid is added and granulation takes place.

10. Use of an iron(II) sulphate-containing reducing agent according to one of claims 1 to 9 for reducing the soluble chromate content in cement.

11. Use of an iron(II) sulphate-containing reducing agent comprising an iron(II) sulphate-containing precipitate which contains iron(II)sulphate monohydrate and is producible by a method comprising the concentration of an iron(II) sulphate-containing used sulphuric acid from the production of titanium dioxide according to the sulphate process and the separation of the sulphuric acid from the obtained precipitate, the precipitate having a titanium content of 5 to 15% by weight, based on iron, and an average crystallite size of less than 1 µm, for reducing the soluble chromate content in cement.

12. Use according to one of claims 10 or 11, **characterised in that** 0.01 to 5.0% by weight, preferably 0.2 to 1.5% by weight, of the iron(II) sulphate-containing precipitate is added to the cement.

13. Use according to one of claims 10 to 12, **characterised in that** the iron(II) sulphate-containing reducing agent is added to the powdered cement after milling and before or during filling in packages or bulk containers or transport containers.

14. Use according to one of claims 10 to 13, **characterised in that** the iron(II) sulphate-containing reducing agent is first added to the cement when it is used, **in that** the iron(II) sulphate-containing reducing agent is added to the cement during mixing with water or directly before this or directly thereafter.

15. Use according to claim 14, **characterised in that** the iron(II) sulphate-containing reducing agent is added in the form of a suspension or solution.

16. Preparation of cement and water-soluble metal sulphates, **characterised in that** the preparation contains 0.01 to 5.0% by weight, preferably 0.2 to 1.5% by weight, of an iron(II) sulphate-containing precipitate which contains iron(II)sulphate monohydrate and is producible by a method comprising the concentration of an iron(II) sulphate-containing used sulphuric acid from the production of titanium dioxide according to the sulphuric process and the separation of the sulphuric acid from the obtained precipitate, the precipitate having a titanium content of 5 to 15% by weight, based on iron, and an average crystallite size of less than 1 µm.

## Revendications

1. Agent de réduction contenant du sulfate de fer (II), comprenant du sel vert et un précipité contenant du sulfate de fer (II), dans lequel le précipité contenant du sulfate de fer (II) contient du sulfate de fer (II) monohydraté et peut être obtenu par un procédé comprenant la concentration d'un acide sulfurique usé contenant du sulfate de fer (II) provenant de la production du dioxyde de titane d'après le procédé aux sulfates et la séparation de l'acide sulfurique du précipité obtenu.

2. Agent de réduction contenant du sulfate de fer (II) selon la revendication 1, **caractérisé en ce que** le précipité contenant du sulfate de fer (II) présente une taille moyenne des cristallites d'au plus de 1 µm, de préférence entre 0,1 et 1,0 µm, de façon particulièrement préférée entre 0,2 et 0,5 µm.

3. Agent de réduction contenant du sulfate de fer (II) selon l'une ou plusieurs des revendications précédentes, **caractérisé en ce que** l'acide sulfurique usé contenant du sulfate de fer (II) présente une teneur en titane de moins de 1,5% en poids, de préférence de moins de 0,8% en poids.

4. Agent de réduction contenant du sulfate de fer (II) selon l'une des revendications précédentes, **caractérisé en ce que** le précipité séparé contient 40 à 60 % en poids de sulfate de fer (II) monohydraté, 3 à 10 % en poids d'autres sels métalliques, 15 à 30 % en poids d'acide sulfurique et 10 à 13 % en poids d'eau.

5. Agent de réduction contenant du sulfate de fer (II) selon l'une des revendications 1 à 4, **caractérisé en ce que**, lors de la préparation du précipité de sulfate de fer (II), après la séparation de l'acide sulfurique, une réduction de la quantité d'acide sulfurique adhérant au précipité séparé s'effectue par lavage avec de l'eau, de l'acide dilué, une solution saturée de FeSO₄ ou des solutions aqueuses diluées contenant du FeSO₄.

6. Agent de réduction contenant du sulfate de fer (II) selon la revendication 1 à 4, **caractérisé en ce que**, lors de la préparation du précipité de sulfate de fer (II), après la séparation de l'acide sulfurique, une réduction de la quantité d'acide sulfurique adhérant au précipité séparé s'effectue par déplacement avec de l'air comprimé ou par lavage avec de la vapeur d'eau.

7. Agent de réduction contenant du sulfate de fer (II) selon l'une des revendications 1 à 4, **caractérisé en ce que**, lors de la préparation du précipité de sulfate de fer (II), après la séparation de l'acide sulfurique, une réduction de la quantité d'acide sulfurique adhérant au précipité séparé s'effectue avec de l'eau et du fer métallique ou avec un composé basique du fer (II) à une température au-dessus de 60° C.

8. Agent de réduction contenant du sulfate de fer (II) selon l'une des revendications 1 à 4, **caractérisé en ce que** lors de la préparation du précipité de sulfate de fer (II), après la séparation de l'acide sulfurique, une réduction de la quantité d'acide sulfurique adhérant au précipité séparé s'effectue par une neutralisation partielle ou une neutralisation par addition de MgO pulvérulent et/ou Mg(OH)₂ ou de leurs suspensions.

9. Agent de réduction contenant du sulfate de fer (II) selon l'une des revendications 5 à 8, **caractérisé en ce qu'**après la réduction de la quantité d'acide sulfurique adhérant au précipité séparé ou après la neutralisation partielle ou la neutralisation de l'acide résiduel dans le précipité séparé, une quantité définie d'eau, d'une solution aqueuse de sel ou d'un acide sulfurique dilué est ajoutée et **en ce qu'**une granulation s'effectue.

10. Utilisation d'un agent de réduction contenant du sulfate de fer (II) selon l'une des revendications 1 à 9 pour la réduction de la teneur en chromate soluble dans du ciment.

11. Utilisation d'un agent de réduction contenant du sulfate de fer (II), comprenant un précipité contenant du sulfate de fer (II) qui contient du sulfate de fer (II) monohydraté et qui peut être préparé par un procédé comprenant la concentration d'un acide sulfurique usé contenant du sulfate de fer (II), provenant de la production du dioxyde de titane d'après le procédé aux sulfates, et la séparation de l'acide sulfurique du précipité obtenu, dans lequel le précipité présente une teneur en titane de 5 à 15 % en poids, rapportés au fer, et une taille moyenne des cristallites de moins de 1 µm, pour la réduction de la teneur en chromate soluble dans du ciment.

12. Utilisation selon l'une des revendications 10 ou 11, **caractérisée en ce que** 0,01 à 5,0 % en poids, de préférence 0,2 à 1,5 % en poids du précipité contenant du sulfate de fer (II) sont ajoutés au ciment.

13. Utilisation selon l'une des revendications 10 à 12, **caractérisée en ce que** l'agent de réduction contenant du sulfate de fer (II) est ajouté au ciment pulvérulent après le broyage et avant ou pendant le remplissage dans des emballages ou des récipients de produits en vrac ou des récipients de transport.

14. Utilisation selon l'une des revendications 10 à 13, **caractérisée en ce que** l'agent de réduction contenant du sulfate de fer (II) n'est ajouté au ciment que lors de l'utilisation, **en ce que** l'agent de réduction contenant du sulfate de fer (II) est ajouté au ciment pendant le mélange avec l'eau ou juste avant ou juste après.

15. Utilisation selon la revendication 14, **caractérisée en ce que** l'agent de réduction contenant du sulfate de fer (II) est ajouté sous forme d'une suspension ou d'une solution.

16. Préparation de ciment et de sulfates métalliques solubles dans l'eau, **caractérisée en ce que** la préparation contient 0,01 à 5,0 % en poids, de préférence 0,2 à 1,5% en poids d'un précipité de sulfate de fer (II) qui contient du sulfate de fer (II) monohydraté et qui peut être préparé par un procédé comprenant la concentration d'un acide sulfurique usé contenant du sulfate de fer (II) monohydraté provenant de la production du dioxyde de titane d'après le procédé aux sulfates et la séparation de l'acide sulfurique du précipité obtenu, dans lequel le précipité présente une teneur en titane de 5 à 15 % en poids, rapportés au fer, et une taille moyenne des cristallites d'au plus 1 µm.
